# EUROPEAN PATENT SPECIFICATION

(11) **EP 0 289 185 B1**
(45) Date of publication and mention of the grant of the patent: **10.11.1993**
(21) Application number: 88303459.7
(22) Date of filing: 18.04.1988
(51) Int. Cl.: G02B 6/36, G01D 5/26, B65H 7/14, B65H 7/04, G01V 9/04

(54) **Optic sensing assembly**
Optische Sensoranordnung
Montage d'un capteur optique

(30) Priority: 30.04.1987 US 44389; 10.11.1987 US 119012
(43) Date of publication of application: 02.11.1988
(73) Proprietor: MOLEX INCORPORATED, Lisle Illinois 60532 (US)
(72) Inventor: Dambach, Philip J., Naperville Illinois (US); Brown, Ray, Los Gatos California (US)
(74) Representative: Slight, Geoffrey Charles

(56) References cited:
- GB-A- 2 162 335
- US-A- 3 683 167
- TOUTE L'ELECTRONIQUE, no. 460, January 1981, pages 53-56, Paris, FR; P. AMBERNY: "Existence et utilisation des capteurs optoélectroniques à fibres optiques"

## Description

The present invention relates to optical sensing systems and more particularly to optical sensing assemblies for supporting the ends of a pair of fiber optic cables in proximity to a target area where light reflection is to be detected.

Fiber optic technology is increasingly used in place of conventional electrical circuits and components for a variety of different functions. Advantages can include simplicity, reliability and, with decreasing cost of fiber optic components, decreased expense.

There are many instances when it is necessary or desirable to detect the presence or absence or the position of an object at a given location. One example is a printer used for reproducing material such as text or graphic output from a computer or other source. Typically a printer includes a mechanism for feeding paper in sheet or continuous form to a location where characters or other matter is printed onto the paper. In connection with the control of the printer or computer or the like, it is desired to determine whether or not paper is present at a location in the printer or associated paper feed mechanism. For this purpose, a sensor is used along the paper feed path to determine whether or not paper is present.

In the past it has been conventional to mount an electrical switch near the paper feed path. The typical switch used for this purpose includes a lever or arm in the paper path that is moved by paper in the path to operate the switch. Electrical conductors extend from the switch to remote circuitry, and the switch includes moving mechanical parts causing expense, complexity and the eventual need for replacement. Of course there are many other instances in which electrical switches and similar electrical circuit components have been used to detect the presence or position of an object at a given location, and all such instances are potentially subject to similar problems and disadvantages.

In order to overcome disadvantages incident to the use of electrical sensing devices, it would be desirable to use fiber optic techniques in place of electrical components. However, other problems arise in adapting fiber optic technology to an optical sensing system. The difficulties include connecting the ends of fiber optic cables with a simple and inexpensive assembly while achieving optimum use of transmitted light. Since the goal is to provide a reliable indication of the presence of an object, such as paper along a printer paper feed path, an accurate optical system must be provided to assure that the maximum amount of light is properly transmitted to and from a target area. This should be accomplished without complex and expensive optical components, without the necessity for critical manufacturing tolerances and without painstaking assembly or fabrication procedures.

It is an object of the present invention to provide improved optical sensing assemblies for detecting the presence or absence of light reflection at a target area.

The present invention proves an improved optical sensing assembly, as defined in claim 1, for use in an optical sensing system for sensing light reflection from a target area. Such a system would include a fiber optic light supply cable and a fiber optic light receiving cable with the ends of the cables disposed in proximity to the target area. The optical sensing assembly of this invention thus includes a housing having mounting means for supporting the housing in a predetermined orientation with respect to the target area and a cable holding element for holding the fiber optic cable ends. The housing and cable holding element include cooperating latch means for securing the cable holding element to the housing, and the cable holding element includes socket means for receiving the cable ends. Lens means located on said cable holding element are disposed in light transmitting relation with said socketing means for directing or focusing light from the light supply cable end upon the target area and for directing or focusing light from the target area upon the light receiving cable end.

Some ways of carrying out the present invention will now be described in detail with reference to drawings which show two specific embodiments.

The present invention together with the above and other objects and advantages may best appear from the following detailed description of the embodiment of the invention shown in the accompanying drawings, wherein:
FIG. 1 is a perspective view of an optic sensing assembly constructed in accordance with the present invention;
FIG. 2 is an exploded perspective view of the assembly of FIG. 1 illustrating the components prior to assembly, and illustrating an alternate mounting structure in broken lines;
FIG. 3 is a perspective view of the cable holding element of the assembly of FIG. 1;
FIG. 4 is a fragmentary front elevational view of the assembly of FIG. 1;
FIG. 5 is a sectional view taken along the line 5-5 of FIG. 4 and illustrating in broken lines the cable holding element prior to assembly;
FIG. 6 is a sectional view taken along the line 6-6 of FIG. 4;
FIG. 7 is a sectional view taken along the line 7-7 of FIG. 4;
FIG. 8 is a fragmentary sectional view taken along the line 8-8 of FIG. 7, illustrating the light paths used to sense reflection at a target area;
FIG. 9 is a front elevational view of an optic sensing assembly comprising an alternate embodiment of the present invention;
FIG. 10 is a perspective view of the cable holding element of the optic sensing assembly of FIG. 9;
FIG. 11 is a cross sectional view taken along the line 11-11 of FIG. 9;
FIG. 12 is a cross sectional view taken along the line 12-12 of FIG. 9; and
FIG. 13 is a cross sectional view taken along the line 13-13 of FIG. 12.

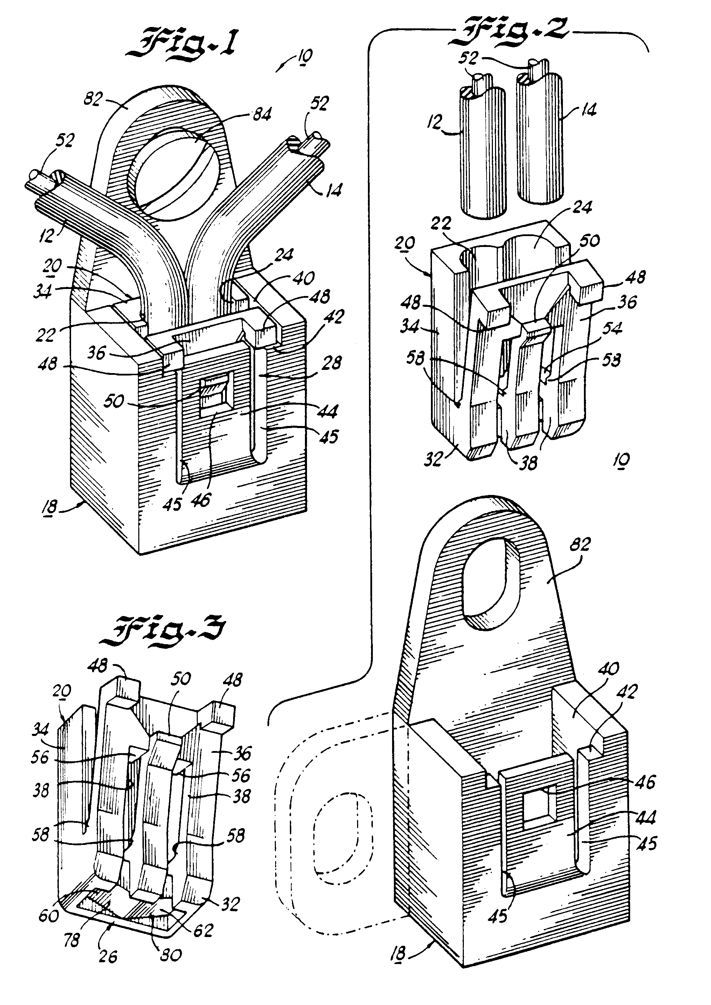

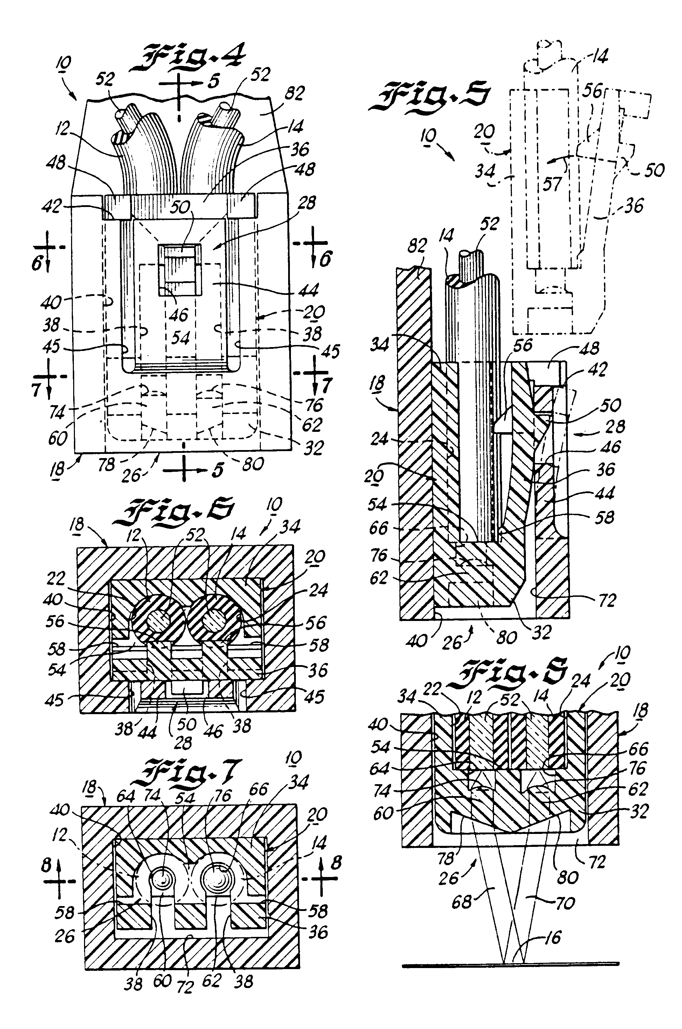

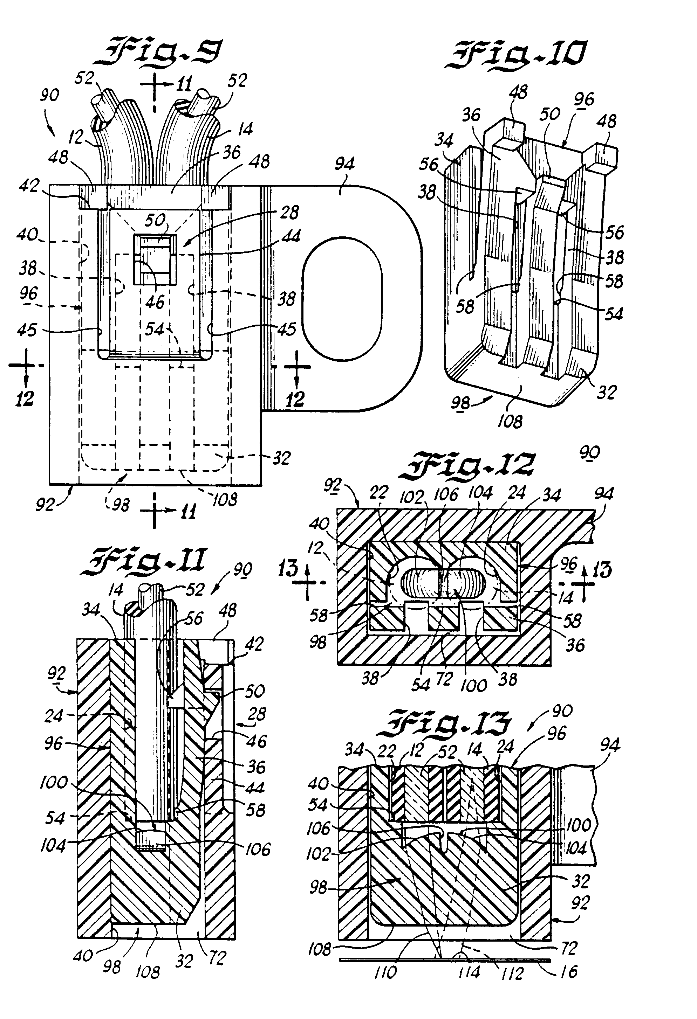

With reference to FIGS. 1-8 of the accompanying drawings, there is illustrated an optic sensing assembly designated as a whole by the reference character 10 and constructed in accordance with the principles of the present invention. Assembly 10 is secured to the ends of a light supply fiber optic cable 12 and a light receiving fiber optic cable 14 and is incorporated in an optical sensing system used for detecting the presence or absence of light reflection at a target area 16 (FIG. 8).

In general, the optic sensing assembly 10 of the present invention includes a housing generally designated as 18 within which is releaseably mounted a cable holding element 20. The cable holding element 20 includes sockets 22 and 24 for the ends of cables 12 and 14 as well as a lens structure 26 for transmitting light between the cable ends and the target area 16. A latch system 28 holds the cable holding element 20 in the housing 18, provides a stress relief function for the cables 12 and 14 and accurately positions the cables in sockets 22 and 24 for optimum use of light in detecting the presence of light reflection at the target area 16.

The assembly 10 can be used in an optical sensing system for detecting the presence of paper along the paper feed path of a printer used with a computer or other source of text or graphic matter to be printed. In this case the target area 16 is an area along the paper feed path where paper may be present as illustrated in FIG. 8 to reflect light or, alternatively, paper may not be present in which case light is not reflected. The principles of the present invention are equally applicable to many other systems in which the presence or absence or position of an object is detected, either by reflection from the object or by reflection from a target area blocked by the object. In any such system, the light supply cable 12 is provided with light from any conventional source of visible or infra-red or other light and the light receiving cable 14 extends to any conventional light responsive device providing an output or control signal in accordance with the presence or absence of reflected light transmitted to the cable 14. The details of the sensing system not shown in the drawings are unnecessary to an understanding of the present invention.

Cable holding element 20 is an integral, one-piece body of material having the optical qualities needed for the lens structure 26 and having the strength and flexibility needed for the sockets 22 and 24 and for the latch system 28. Preferably, cable holding element 20 is a uniform, homogeneous, molded mass of clear, transparent, optical grade acrylic plastic or similar material.

The cable holding element 20 is generally of a rectangular shape, and includes a bottom wall segment 32 in which the lens structure 26 is defined. Extending up from wall segment 32 is a fixed wall structure 34 having a scalloped, partly circular internal shape defining the cable sockets 22 and 24, each open along one side. A flexible and resilient latch tongue 36 also extends up from wall segment 32 opposite the wall structure 34. Tongue 36 overlies the open sides of the cable sockets 22 and 24. Flexibility of tongue 36 results from the nature of the material of element 20, the dimensions of the tongue, and from recesses 38 also serving to accommodate parts of the mold used to form the element 20.

Housing 18 is also generally rectangular in shape, and is preferably molded integrally as one piece of a suitable plastic material such as opaque, glass filled polyester or the like. A generally rectangular cavity or opening 40 extends throughout the length of housing 18 and is sized slideably to receive the cable holding element 20. A recess or notch 42 is formed in the front of housing 18, and a wall portion 44 extending down from this recess includes a latching opening or slot 46 aligned with the tongue 36 when the cable holding element 20 is inserted into cavity 40. Wall portion 44 is flanked by slots 45 and is of a reduced thickness so that it is able to flex outwardly when cable holding element 20 is inserted into cavity 40.

When cable holding element 20 is inserted into the cavity 40 of housing 18, it is held precisely in position by the latch system 28 including tongue 36 and latch slot 46. A pair of stop fingers 48 extend outwardly from the end of tongue 36 to engage the bottom of notch 42 to limit insertion and permit the cable holding element 20 to fit flush in housing 18. A latch protuberance 50 also extends outwardly from tongue 36. As element 20 enters cavity 40, the tongue 36 is resiliently flexed inward and the wall portion 44 flexes outward as shown in broken lines in FIG. 5 until protuberance 50 snaps into latching engagement with latch slot 46 (FIG. 5) to retain the element 20 in assembly with housing 18. If desired for removal of paper particles or the like from lens structure 26 or for other reasons, the element 20 may be removed by moving wall section 44 forward until the protuberance 50 is clear of the slot 46 and then lifting the element 20.

Fiber optic cables 12 and 14 are similar to one another and are standard stepped index, multimode cables having, for example, cores 52 with diameters of one millimeter and outside diameters of 2.2 millimeters, although cables of other types and configurations could be used if desired. The ends of the cables 12 and 14 with a smooth optical finish are received directly into sockets 22 and 24 in a nonterminated condition, i.e. without the necessity for applying terminal elements or otherwise specially preparing the cable ends.

Sockets 22 and 24 have a size and shape to permit an unobstructed sliding insertion of the cables 12 and 14 in the axial direction into the cable holding element 20 before assembling the element 20 to the housing 18. The sockets are side-by-side and parallel to each other and each socket ends at a stop surface 54 defined by the top of the bottom wall segment 32 as best seen in FIGS. 5 and 8. When cables 12 and 14 are inserted, the ends of the cores 52 are accurately located above the lens structure 26 by engagement of the cable ends with the stop surface 54.

The inner side of tongue 36 includes a pair of spaced apart strain relief projections 56, one aligned with each socket 22 and 24 as illustrated in FIGS. 5 and 6. Projections 56 initially have a slight interference fit with the inserted cables 12 and 14, as can be seen in broken lines in FIG. 5. This interference fit tends to retain the cables in place in the sockets 22 and 24 until the cable holding element 20 is inserted into housing 18.

After insertion of the nonterminated cable ends into the sockets 22 and 24, the cable holding element 20 is seated into the housing 18 and the tongue 36 flexes inwardly as described above. Firm mechanical holding and strain relief of cables 12 and 14 automatically results. As tongue 36 flexes, the projections 56 engage the sheathes of cables 12 and 14 and apply a force in the direction of the arrow 57 (FIG. 5) to urge the cable ends against the stop surface 54. In the assembled position shown in full lines in FIG. 5, projections 56 firmly grip the cables 12 and 14 and provide a strain relief function assuring that the cables are not moved from their precisely determined positions after assembly. The cable ends are prevented from flexing forward during flexing of tongue 36 by engage ment with thick base portions 58 of the tongue. Portions 58 also causes flexing of the tongue 36 to occur in the region spaced above the stop surface 54.

Lens structure 26 appears best in FIGS. 7 and 8 and is formed as an integral part of the one piece cable holding element 20 to assure that the optical components of the assembly 10 achieve optimum use of the light transmitted from the light supply cable 12. The lens structure 26 includes two lens systems 60 and 62 aligned respectively with sockets 22 and 24 and communicating with the cable ends through light path openings 64 and 66. A light path 68 from the end of cable 12 to target area 16 and a light path 70 from target area 16 to the end of cable 14 are shown in FIG. 8. These illustrations are approximations, and the light paths are not so sharply defined in actuality. Path 68 extends through opening 64 and lens system 60 while path 70 extends through lens system 62 and opening 66. The lower end of cavity 40 in housing 18 provides an aperture 72 for light to travel between target area 16 and lens structure 26.

With respect to the embodiment of FIGS. 1-8, the ends of cable cores 52 are assumed to function as sources or receivers of diverging or converging non collimated light with effective light apertures of about thirty degrees. Lens system 60 includes a lens portion 74 for transforming the diverging light beam from cable 12 into a generally collimated light beam. Lens system 62 includes a lens portion 76 for transforming a generally collimated light beam reflected from target area 16 into a converging beam directed toward the center of cable 14. The ends of cables 12 and 14 are coplanar at stop surface 54 and lens portions 74 and 76 are spherical segments with generally similar radii of curvature. Portion 74 is smaller in area or diameter than portion 76 in order to transmit only the more intense central part of the light beam projected from cable 12. Portion 76 is larger in order to direct all light reflected from target area 16 onto the end of cable 14.

Lens systems 62 and 64 include refraction lens portions 78 and 80 symmetrical about the centerlines of the two lens systems. Portions 78 and 80 comprise flat planar surfaces each arranged at an angle related to the angle of refraction of the air-acrylic interface and the distance to the target area 16 in order that the collimated beams of light paths 68 and 70 overlap fully at the target area for maximum light reflection. For example, in the embodiment illustrated in FIGS. 1-8, the distance from the bottom of housing 18 to target area 16 is about 5 millimeters (0.2 inch) and the lens portions 78 and 80 are at an angle of about 68 degrees, 15 arc minutes to horizontal. To prevent scratching or other damage to the lens structure 26 and the accumulation of debris such as paper particles at lens portions 78 and 80, the cable holding element 20 is inset above the bottom of the housing as appears in FIGS. 5 and 8. Lens portions 72 and 74 each have a relatively small radius of curvature of about 0.66 millimeters (0.03 inch) in order to direct light toward or from an assumed point source or target at the closely adjacent end of the core 52 of cable 12 or 14.

A mounting tab 82 extends upward from the housing 18 as seen in FIG. 1. A fastener 84 is used to secure the assembly 10 in a fixed position at the desired distance from the target area 16. An alternate location for a mounting tab is shown in broken lines in FIG. 2, and this variation may be preferred if the fastener 84 interferes with insertion and removal of cable holding element 20 or depending upon space requirements.

In use, the ends of cables 12 and 14 are inserted against stop surface 54 in sockets 22 and 24. Then the cable holding element 20 is seated into cavity 40 of housing 18, causing the latch system 28 to hold the element 20 in place and to hold the cables 12 and 14 in place with a strain relief effect. Light supplied from cable 12 travels along path 68 through lens system 60 onto target area 16. If light reflection occurs, light is reflected from the target area 16 along path 70 through lens system 62 to cable 14, and the presence or absence of reflected light can be used to provide a control function. Target area 16 may be a reflective object, such as paper in the feed path of a printer. Alternatively, target area 16 may be a reflective surface and an object to be detected may move between the target area 16 and the assembly 10. Assembly 10 can also serve as a proximity detector by detecting the presence of a reflective object at the distance from the assembly 10 where the light paths 68 and 70 overlap one another.

Referring now to FIGS. 9-13, there is illustrated an optic sensing assembly 90 constituting an alternative embodiment of the present invention. In many respects, the assembly 90 of FIGS. 9-13 is similar to the assembly 10 shown in FIGS. 1-8 and described in detail above. In the following description, the same reference numerals are used for similar elements of the two assemblies, and the description is directed primarily to the differences.

As with the assembly 10, the optic assembly 90 is secured to the ends of fiber optic cables 12 and 14 and is part of an optical sensing system detecting the presence or absence of light at target area 16. Assembly 90 includes a housing 92 similar to the housing 18 described above, but having a laterally extending mounting tab 94 for securing the housing 92 a predetermined distance from the target 16. Cable holding element 96 is similar in some respects to the element 20 described above, but includes a lens structure 98 providing additional advantages to supplement the advantages of the lens structure 26 described above.

In some of the environments in which optical sensing assemblies may be employed, dirt or dust may be present and may interrupt or degrade the optical path and decrease the sensitivity of the optical sensor. Lens structure 98 is shaped to eliminate recesses in the optical path where dirt or dust might accumulate and be trapped. In addition, lens structure 98 is designed to employ point focused light paths rather than collimated light paths with improved optical coupling efficiency. Another result of this design is that the lens structure 98 is less subject to difficulties caused by manufacturing variations, and thus is less expensive to manufacture. Lens structure 98 provides a symmetrical optical system. Fiber optic cables 12 and 14 may be mounted in either of the two possible positions in the cable holding element 96, and either cable may serve as the light supply cable. Thus the expense of assembly and installation of the optical sensing assembly 90 is reduced.

Lens structure 98 includes a focusing lens 100 in the form of a spherical segment having a relatively large radius of curvature. Lens 100 is symmetrical with respect to the cores 52 of cables 12 and 14 because its radius of curvature originates at a point coinciding with the center line between cables 12 and 14. In the illustrated embodiment of the invention the radius of curvature of lens 100 is about 2.5 millimeters (0.10 inch). This large radius simplifies manufacture of the assembly 90 because small variations in the shape or size of lens 100 do not have a large effect on the ability of the lens to focus or direct light in the desired manner as compared with lenses such as those of the assembly 10 having a small radius of curvature.

Lens 100 is subdivided into two similar segments 102 and 104 by a groove or recess 106. Segments 102 and 104 are aligned respectively with the cores 52 of fiber optic cables 12 and 14 in order to receive or transmit light from or toward the cables. The groove 106 provides isolation of light in each side of the lens 100 from the other side. Thus cross coupling or cross talk of transmitted and received light is prevented.

Lens structure 98 includes a lower refraction surface 108 that is flat and planar in configuration. Since no indentations or recesses are present in this exposed region, build up of dirt or other particles is avoided and the ability of the optical sensing assembly to function without the necessity for cleaning is improved.

The light transmitting and controlling components of the lens structure 98 including the lens 100, the groove 106 and the surface 108 are all symmetrical with respect to a plane separating the cores 52 of cables 12 and 14. Thus either cable may serve as the light supply cable and the other as the receiving cable without affecting the operation of the sensing assembly 90.

Fiber optic cables of appreciable length may eliminate or attenuate light having wider angle characteristics and transmit light that is tightly collimated. Thus, in the embodiment of the invention illustrated in FIGS. 9-13 , the cable cores 52 are assumed to emit or receive collimated rather than diverging or converging light. In FIG. 13 two light paths 110 and 112 are illustrated. If cable 12 is used to supply collimated light, light transmitted along path 110 is focused by lens segment 102 toward a point or small area at the target 16. Refraction occurs at the lower surface 108. Light path 112 intersects the target 16 at an area or region 114 within which path 110 terminates. Light reflected from any point or area in this region travels along or within the path 112 through the lower surface 108 and lens segment 104 toward the cable 14. Light enters the core 52 of cable 14 at a small angle relative to the cable axis, consistent with the requirements of the optical fiber. If cable 14 is used as the light source, the operation is the reverse and paths 110 and 112 each assume the alternate shape and function.

The lens portions 74 and 76 of the optic sensing assembly 10 and lens segments 102 and 104 of the optic sensing assembly 90 are spherical segments. If desired, different curved shapes, such as an aspherical shape, could be used to accomplish more precise light direction and control.

The optic sensing assemblies described with reference to and as shown in the drawings are simple and inexpensive to make and to assemble. They include an integral lens system maximizing the use of available light. The assemblies are easily connected to simple, nonterminated ends of fiber optic cables without special preparation of the cable ends and without the necessity for special care or highly skilled labor. They maximize the coupling of light with an assembly that can be economically manufactured. The assemblies are such that fiber optic cable ends are mechanically secured and precisely optically located in a simple and automatic manner. The assemblies provide improvements in optic sensing overcoming disadvantages of prior electrical sensing systems and of known optical systems.

## Claims

1. An optical sensing assembly (10;90) for use in an optical sensing system for sensing light reflection from a target area (16), in which a fiber optic light supply cable (12) and a fiber optic light receiving cable (14) have ends disposed in proximity to the target area, said optical sensing assembly comprising
a housing (18;92) having mounting means (82;84;94) for supporting said housing in a predetermined orientation with respect to the target area;
a cable holding element (20;96);
said housing and cable holding element including cooperating latch means (28) for releasably securing said cable holding element to said housing;
said cable holding element including socket means (22,24) for receiving one end of said supply and receiving cables (12,14); and
lens means (26;98) located on said cable holding element and disposed in light transmitting relation with said socket means for directing light from the light supply cable held by the cable holding element upon the target area and for directing light from the target area upon the light receiving cable held by the cable holding element.

2. The optical sensing assembly of claim 1, said socket means (22,24) including first and second sockets formed in said cable holding element sized directly to receive nonterminated ends of the light supply cable and the light receiving cable respectively.

3. The optical sensing assembly of claim 2, said lens means (26;98) being formed integrally with said cable holding element.

4. The optical sensing assembly of claim 3, said lens means (26;98) including first (60;102) and second (62;104) lens systems aligned respectively with said first (22) and second (24) sockets, each including a curved lens portion (74;76;100) for transforming transmitted light between a generally collimated light path and a convergent light path extending from the curved lens portion to the respective socket.

5. The optic sensing assembly of claim 4, the lens portions (74,76) of said first (60) and second (62) lens systems having generally the same radius of curvature and the curved lens portion (74) of the first lens system (60) having a smaller area than the curved lens portion (76) of the second lens system (62).

6. The optic sensing assembly of claim 4, each said lens system (60,62) also including a refraction portion (78,80) directing generally collimated light from the lens system (60,62) toward the target area (16).

7. The optic sensing assembly of claim 6, said refraction portions (78,80) being coplanar or disposed on differently related planes.

8. The optic sensing assembly of claim 4, said lens portions (102,104) being spherical segments of the same sphere, and a recess (106) in said lens means (98) separating said segments.

9. The optic sensing assembly of any preceding claim, said housing (18) including a cavity (40) for slideably receiving said cable holding element (20).

10. The optic sensing assembly of claim 9, said latch means (28) including a strain relief structure (56) engageable with cable ends (12,14) in said socketing means (22,24) in response to engagement of said latch means.

11. The optic sensing assembly of claim 9 or 10, said latch means (28) including a flexible latch member (36) defined on said cable holding element (20) flexibly deformed toward said socketing means (22,24) upon receipt of said cable holding member (20) within said cavity (40).

12. The optic sensing assembly as claimed in any preceding claim in which the cable holding element (20) is formed as an integral, one-piece body; said socketing means includes stop portions (54) for positioning fiber optic cable ends (12,14) within first (22) and second (24) sockets at predetermined positions within said cable holding element (20); said housing having a cavity wall defining a cavity (40) for slideably receiving said holding element (20); and said latch means includes first (46) and second (36) latch structures on said housing (18) and said holding element (20) engageable with one another upon slideable receipt of said holding element (20) into said cavity (40) for securing said holding element (20) with said stop portions (54) positioned at a predetermined location relative to said housing (18); and an aperture (72) in said housing communicating with said cavity (40) for permitting light transmission between said predetermined location and a target area (16).

13. An optic sensing assembly as claimed in claim 12, said first latch structure (46) comprising a locking recess in said cavity wall, and said second latch structure (36) comprising a flexible resilient portion of said holding element having a locking proturberance (50) engageable with said locking recess (46).

14. An optic sensing assembly as claimed in claim 13, comprising strain relief projection (56) means on said flexible resilient portion (36) movable from outside of said sockets (22,24) into said sockets in response to flexing of said flexible resilient portion (36).

15. An optic sensing assembly as claimed in claim 14, said flexible resilient portion (36) comprising a tongue having said locking protuberance (50) and said strain relief projection means (56) on opposite sides.

16. An optic sensing assembly as claimed in claim 15, said stop portions (54) being generally coplanar, and said sockets (22,24) and tongue (36) being generally parallel to one another.

## Patentansprüche

1. Optische Sensoranordnung (10;90) zur Verwendung in einem optischen Sensorsystem zum Feststellen einer Lichtreflexion aus einem Zielgebiet (16), bei der ein faseroptisches Lichtzufuhrkabel (12) und ein faseroptisches Lichtaufnahmekabel (14) mit ihren Enden in der Nähe des Zielgebiets angeordnet sind, wobei die optische Sensoranordnung versehen ist mit
einem Gehäuse (18;92) mit einer Befestigungseinrichtung (82,84;94) zum Abstützen des Gehäuses in einer vorbestimmten Ausrichtung in bezug auf das Zielgebiet,
einem Kabelhalteteil (20;96),
wobei das Gehäuse und das Kabelhalteteil eine zusammenwirkende Verriegelungseinrichtung (28) zum lösbaren Festlegen des Kabelhalteteils am Gehäuse aufweisen,
das Kabelhalteteil eine Fassung (22,24) zur Aufnahme eines Endes des Zufuhr- und des Aufnahmekabels (12,14) aufweist, und
einer Linseneinrichtung (26;98), die am Kabelhalteteil örtlich festgelegt und in einem Lichtübertragungsverhältnis mit der Fassung angeordnet ist, um Licht von dem vom Kabelhalteteil gehaltenen Lichtzufuhrkabel auf das Zielgebiet zu richten und um Licht vom Zielgebiet auf das vom Kabelhalteteil gehaltene Lichtaufnahmekabel zu richten.

2. Optische Sensoranordnung nach Anspruch 1, bei der die Fassung (22,24) einen ersten und einen zweiten im Kabelhalteteil gebildeten Kabelschuh aufweist, die so bemessen sind, daß sie nicht-abgeschlossene Enden des Lichtzufuhrkabels bzw. des Lichtaufnahmekabels unmittelbar aufnehmen.

3. Optische Sensoranordnung nach Anspruch 2, bei der die Linseneinrichtung (26;98) einstückig mit dem Kabelhalteteil ausgebildet ist.

4. Optische Sensoranordnung nach Anspruch 3, bei der die Linseneinrichtung (26;98) ein erstes (60;102) und ein zweites (62;104), jeweils mit dem ersten (22) und dem zweiten (24) Kabelschuh ausgerichtetes Linsensystem aufweist, die jeweils einen gekrümmten Linsenbereich (74,76;100) zum Umwandeln übertragenen Lichtes zwischen einem im allgemeinen kollimierten Lichtweg und einem konvergierenden Lichtweg enthalten, der von dem gekrümmten Linsenbereich zu dem jeweiligen Kabelschuh verläuft.

5. Optische Sensoranordnung nach Anspruch 4, bei der die Linsenbereiche (74,76) des ersten (60) und des zweiten (62) Linsensystems im allgemeinen den gleichen Krümmungsradius aufweisen und der gekrümmte Linsenbereich (74) des ersten Linsensystems (60) ein kleinere Fläche als der gekrümmte Linsenbereich (76) des zweien Linsensystems (62) besitzt.

6. Optische Sensoranordnung nach Anspruch 4, bei der jedes Linsensystem (60,62) ferner einen Brechungsbereich (78,80) aufweist, der im allgemeinen kollimiertes Licht von dem Linsensystem (60,62) zum Zielgebiet (16) richtet.

7. Optische Sensoranordnung nach Anspruch 6, bei der die Brechungsbereiche (78,80) gleichebenig oder auf unterschiedlich ausgerichteten Ebenen angeordnet sind.

8. Optische Sensoranordnung nach Anspruch 4, bei der die Linsenbereiche (102,104) Kugelsegmente der gleichen Kugel sind und eine Ausnehmung (106) in der Linseneinrichtung (98) die Segmente trennt.

9. Optische Sensoranordnung nach einem beliebigen vorhergehenden Anspruch, bei der das Gehäuse (18) einen Hohlraum (40) für ein gleitbares Aufnehmen des Kabelhalteteils (20) aufweist.

10. Optische Sensoranordnung nach Ansrpuch 9, bei der die Verriegelungseinrichtung (28) eine Spannungsentlastungsausbildung (56) aufweist, die mit den Kabelenden (12,14) in der Fassung (22,24) als Folge eines Eingriffs der Verriegelungseinrichtung in Eingriff bringbar ist.

11. Optische Sensoranordnung nach Anspruch 9 oder 10, bei der die Verriegelungseinrichtung (28) ein flexibles, am Kabelhalteteil (20) gebildetes Verriegelungsglied (36) aufweist, das bei Aufnahme des Kabelhalteteils (20) im Hohlraum (40) flexibel zur Fassung (22,24) hin verformt wird.

12. Optische Sensoranordnung nach einem beliebigen vorhergehenden Anspruch, bei der das Kabelhalteteil (20) als ein einheitlicher, einstückiger Körper gebildet ist, die Fassung einen Anschlagbereich (54) zum Positionieren der faseroptischen Kabelenden im ersten (22) und zweiten (24) Kabelschuh in vorbestimmten Positionen im Kabelhalteteil (20) aufweist, das Gehäuse eine Hohlraumwand besitzt, die einen Hohlraum (40) zum gleitbaren Aufnehmen des Halteteils (20) bildet, und die Verriegelungseinrichtung erste (46) und zweite (36) Verriegelungsausbildungen am Gehäuse (18) und am Halteteil (20) aufweist, die miteinander bei der gleitbaren Aufnahme des Halteteils (20) in den Hohlraum (40) zum Festlegen des Halteteils mit an einer vorbestimmten Stelle in bezug auf das Gehäuse (18) positioniertem Anschlagbereich (54) in Eingriff bringbar sind, und eine Öffnung (72) im Gehäuse mit dem Hohlraum (40) zur Ermöglichung einer Lichtübertragung zwischen der vorbestimmten Stelle und einem Zielgebiet (16) in Verbindung steht.

13. Optische Sensoranordnung nach Anspruch 12, bei der die erste Verriegelungsausbildung (46) eine Verriegelungsausnehmung in der Hohlraumwand umfaßt und die zweite Verriegelungsausbildung (36) einen flexiblen elastischen Bereich des Halteteils umfaßt, der einen mit der Verriegelungsausnehmung (46) in Eingriff bringbaren Verriegelungsansatz (50) besitzt.

14. Optische Sensoranordnung nach Anspruch 13, mit einer vorspringenden Spannungsentlastungseinrichtung (56) an dem flexiblen elastischen Bereich (36), die von der Außenseite der Kabelschuhe (22,24) in die Kabelschuhe hinein als Folge des Verbiegens des flexiblen elastischen Bereichs (36) bewegbar ist.

15. Optische Sensoranordnung nach Anspruch 14, bei der der flexible elastische Bereich (36) eine Zunge mit dem Verriegelungsvorsprung (50) und der vorspringenden Spannungsentlastungseinrichtung (56) auf gegenüberliegenden Seiten umfaßt.

16. Optische Sensoranordnung nach Anspruch 15, bei der die Anschlagbereiche (54) im allgemeinen gleichebenig sind und die Kabelschuhe (22,24) und die Zunge (36) im allgemeinen parallel zueinander verlaufen.

## Revendications

1. Ensemble de détection optique (10;90) destiné à être utilisé dans un système de détection optique, pour détecter la réflexion de lumière en provenance d'une zone cible (16), dans lequel un câble (12) d'alimentation en lumière, à fibre optique, et un câble (14) de réception de la lumière, à fibre optique, ont des extrémités disposées à proximité de la zone cible, cet ensemble de détection optique comprenant un boîtier (18;92) comportant des moyens de montage (82,84;94) pour supporter le boîtier avec une orientation prédéterminée par rapport à la zone cible, un élément (20;96) de maintien des câbles, le boîtier et l'élément de maintien des câbles comportant des moyens de verrouillage (28) coopérant entre eux pour fixer d'une manière amovible l'élément de maintien des câbles au boîtier, cet élément de maintien des câbles comportant des logements (22,24) pour recevoir une extrémité des câbles d'alimentation et de réception (12,14), et des moyens à lentille (26;98) situés sur l'élément de maintien des câbles et disposés dans une relation de transmission de la lumière avec les logements, de manière à diriger la lumière provenant du câble d'alimentation en lumière, maintenu par l'élément de maintien des câbles, sur la zone cible et pour diriger la lumière provenant de cette zone cible sur le câble de réception de la lumière maintenu par l'élément des maintien des câbles.

2. Ensemble de détection optique suivant la revendication 1 caractérisé en ce que les logements (22,24) sont constitués par des premier et second logements formés dans l'élément de maintien des câbles et dimensionnés de manière à recevoir directement les extrémités respectives non terminées du câble d'alimentation en lumière et du câble de réception de la lumière.

3. Ensemble de détection optique suivant la revendication 2 caractérisé en ce que les moyens à lentille (26;98) sont formés intégralement avec l'élément de maintien des câbles.

4. Ensemble de détection optique suivant la revendication 3 caractérisé en ce que les moyens à lentille (26;98) comportent un premier système de lentille (60;102) et un second système de lentille (62;104), alignés respectivement avec les premier et second logements (22,24), chacun de ces systèmes comportant une portion de lentille courbe (74,76;100) pour transformer la lumière transmise entre un trajet de lumière généralement collimaté et un trajet de lumière convergent s'étendant à partir de la portion de lentille courbe vers le logement respectif.

5. Ensemble de détection optique suivant la revendication 4 caractérisé en ce que les portions de lentille (74,76) des premier et second systèmes de lentille (60,62) ont généralement les mêmes rayons de courbure et la portion de lentille courbe (74) du premier système de lentille (60) a une aire plus petite que celle de la portion de lentille courbe (76) de second système de lentille (62).

6. Ensemble de détection optique suivant la revendication 4 caractérisé en ce que chaque système de lentille (60,62) comporte également une portion de réfraction (78,80) dirigeant d'une manière générale la lumière collimatée provenant du système de lentille (60,62) vers la zone cible(16).

7. Ensemble de détection optique suivant la revendication 6 caractérisé en ce que les portions de réfraction (78,80) sont coplanaires ou disposées sur des plans associés différents.

8. Ensemble de détection optique suivant la revendication 4 caractérisé en ce que les portions de lentille (102,104) sont des segments sphériques de la même sphère et a creux (106) dans les moyens à lentille (98) sépare ces segments.

9. Ensemble de détection optique suivant l'une quelconque des revendications précédentes caractérisé en ce que le boîtier (18) comporte une cavité (40) pour recevoir à coulissement l'élément (20) de maintien des câbles.

10. Ensemble de détection optique suivant la revendication 9 caractérisé en ce que les moyens de verrouillage (28) comportent une structure (56) d'encaissement des contraintes pouvant venir en contact avec les extrémités des câbles (12,14), dans les logements (22,24), en réponse à l'engagement des moyens de verrouillage.

11. Ensemble de détection optique suivant l'une quelconque des revendications 9 ou 10 caractérisé en ce que les moyens de verrouillage (28) comportent un élément de verrouillage flexible (36) défini sur élément (20) de maintien des câbles, et qui est déformé d'une manière flexible en direction des logements (22,24), lors de la réception de l'élément de maintien des câbles (20) dans la cavité (40).

12. Ensemble de détection optique suivant l'une quelconque des revendications précédentes caractérisé en ce que l'élément (20) de maintien des câbles est formé en tant que corps intégral d'une seule pièce, les logements comportent des portions d'arrêt (54) pour mettre en position les extrémités des câbles à fibre optique (12,14), dans les premier et second logements (22,24), dans des positions prédéterminées à l'intérieur de l'élément (20) de maintien des câbles, le boîtier présente une paroi de cavité définissant une cavité (40) pour recevoir à coulissement l'élément de maintien (20) et les moyens de verrouillage comportent des première et seconde structures de verrouillage (46,36) sur le boîtier (18) et sur l'élément (20) de maintien des câbles, ces structures pouvant venir en prise l'une avec l'autre lors de la réception à coulissement de l'élément (20) de maintien des câbles dans la cavité (40), afin de fixer l'élément (20) de maintien des câbles avec les portion d'arrêt (54) situées en un emplacement prédéterminé par rapport au boîtier (18), et une ouverture (72) dans le boîtier communique avec la cavité (40) afin de permettre la transmission de la lumière entre l'emplacement prédéterminé et une zone cible (16).

13. Ensemble de détection optique suivant la revendication 12 caractérisé en ce que la première structure de verrouillage (46) est constituée par un creux de verrouillage dans la paroi de la cavité et la seconde structure de verrouillage (36) est constituée par une portion élastique et flexible de l'élément de verrouillage, comportant une saillie de verrouillage (50) pouvant s'engager dans le creux de verrouillage (46).

14. Ensemble de détection optique suivant la revendication 13 caractérisé en ce qu'il comprend un moyen en saillie (56) d'encaissement des contraintes sur la portion élastique et flexible (36) mobile, à partir de l'extérieur des logements (22,24), vers et dans ces logements, en réponse à la flexion de la portion élastique et flexible (36).

15. Ensemble de détection optique suivant la revendication 14 caractérisé en ce que la portion élastique et flexible (36) est constituée par une languette portant, sur ses faces opposées, la saillie de verrouillage (50) et le moyen en saillie (56) d'encaissement des contraintes.

16. Ensemble de détection optique suivant la revendication 15 caractérisé en ce que les portions d'arrêt (54) sont généralement coplanaires et les logements (22,24) et la languette (36) sont généralement parallèles les uns aux autres.
